# EUROPÄISCHE PATENTSCHRIFT

(11) **EP 2 492 210 B1**
(45) Veröffentlichungstag und Bekanntmachung des Hinweises auf die Patenterteilung: **09.04.2014**
(21) Anmeldenummer: 11001575.7
(22) Anmeldetag: 25.02.2011
(51) Int. Cl.: B65D 75/58, B65D 83/06, B65D 85/72, G01F 11/00, G01F 11/08

(54) **Verpackung mit einer Dosiereinrichtung**
Packaging with a metering device
Emballage doté d'un dispositif de dosage

(43) Veröffentlichungstag der Anmeldung: 29.08.2012
(73) Patentinhaber: Amcor Flexibles Kreuzlingen Ltd., 8280 Kreuzlingen (CH)
(72) Erfinder: Rothenbühler, Martin, 3550 Langnau i.E. (CH); Mota, Vitor, 4425-653 Maia (PT)
(74) Vertreter: Gernet, Samuel Andreas

(56) Entgegenhaltungen:
- EP-A1- 0 115 990
- US-A- 3 207 420

## Beschreibung

Die Erfindung betrifft eine Verpackung für fliess- und rieselfähige Füllgüter, mit einer Dosiereinrichtung zur portionenweisen Entnahme von Füllgut.

Zur dosierten Abgabe von Portionen von Ketchup, Senf und dergleichen in kleiner Menge abzugebender Produkten in flüssiger, teilflüssiger oder pastöser Form werden überwiegend von Hand bedienbare, in ein mit dem Produkt gefüllten Behälter einsetzbare Pumpstationen verwendet. Eine andere gebräuchliche Verpackung besteht aus einem mit dem Produkt gefüllten Zylinder, aus welchem das Produkt mit einem von Hand bedienbaren Kolben portionenweise ausgestossen wird.

Die bekannten Verpackungen mit Dosiersystemen sind oft mit Hygieneproblemen behaftet. Zudem weisen die starren Produktbehälter einen hohen Materialanteil auf. Ein weiterer Nachteil der bekannten Verpackungen mit Dosiersystemen sind die neben dem Produktbehälter für die dosierte Produktabgabe notwendigen Zusatzausrüstungen wir Pumpstationen oder Zylinder/KolbenSysteme. Eine Verpackung mit einer Hauptkammer und einer Dosierkammer wird im Dokument EP-A-0115990 offenbart.

Der Erfindung liegt die Aufgabe zugrunde, eine Verpackung der eingangs genannten Art bereitzustellen, welche die den bekannten Verpackungen mit Dosiersystemen anhaftenden Nachteile nicht aufweist.

Zur erfindungsgemässen Lösung der Aufgabe führt eine Hauptkammer zur Lagerung des Füllgutes, eine mit der Hauptkammer über einen ersten Kanal verbundene Dosierkammer zur Bereitstellung von Füllgutportionen und einen von der Dosierkammer zu einer Ausgabeöffnung führenden, den ersten Kanal querenden zweiten Kanal, wobei die Hauptkammer, die Dosierkammer und die beiden Kanäle schlauchförmig aus einem folienförmigen, flexiblen Verpackungsmaterial gebildet und durch eine Anordnung von einander anliegenden und miteinander durch Siegelung verbundenen Flächenbereichen von Verpackungsmaterial begrenzt sind.

Bei einer bevorzugten Ausgestaltung der erfindungsgemässen Verpackung sind die Hauptkammer und der erste Kanal zwischen gegeneinander gesiegelten ersten Folienstreifen und zweiten Folienstreifen, die Dosierkammer zwischen dem ersten Folienstreifen und einem gegen den ersten Folienstreifen gesiegelten dritten Folienstreifen und der zweite Kanal zwischen den gegeneinander gesiegelten dritten und zweiten Folienstreifen aus dem folienförmigen, flexiblen Verpackungsmaterial gebildet.

Bei einer für eine kontinuierliche Herstellung geeigneten erfindungsgemässen Verpackung ist der erste Folienstreifen auf sich selbst gefaltet und gegen sich selbst gesiegelt und der dritte Folienstreifen gegen den gefalteten Teil des ersten Folienstreifens gesiegelt.

Bei einer alternativen Herstellungsart sind die Hauptkammer, der erste Kanal, die Dosierkammer und der zweite Kanal zwischen gegeneinander gesiegelten ersten Folienstreifen und zweiten Folienstreifen aus dem folienförmigen, flexiblen Verpackungsmaterial gebildet. Hierbei kann der erste Folienstreifen auf sich selbst gefaltet und gegen sich selbst gesiegelt und der zweite Folienstreifen gegen den gefalteten Teil des ersten Folienstreifens gesiegelt ist.

Der erste Kanal kann an einem in die Dosierkammer mündenden Ende in zwei Teilkanäle aufgeteilt sein.

Im Idealfall kreuzen sich die beiden Kanäle in einem Winkel von etwa 90°. Der Kreuzungswinkel kann aber auch kleiner sein und beispielsweise 45° bis 90°, bevorzugt 80° bis 90°, betragen.

Das Verpackungsmaterial ist bevorzugt beidseitig siegelfähig.

Als folienförmiges, flexibles Verpackungsmaterial zur Herstellung der Verpackung geeignet sind gegeneinander siegelbare Verpackungsfolien, die auf der in der fertigen Verpackung die Innenseite und die Aussenseite bildenden Seite eine Siegelschicht aufweisen bzw. deren Innen- und Aussenseiten gegeneinander siegelfähig sind. Die Siegelschicht kann dabei als Siegelfilm über einen Kaschierkleber mit einer Trägerschicht verbunden sein. Die Siegelschicht kann aber auch durch Extrusionsbeschichten oder mit einer zusätzlichen Haftvermittlerschicht durch Coextrusionsbeschichten auf eine Trägerschicht aufgetragen sein. Unter gewissen Bedingungen ist es auch möglich, eine Siegelschicht und eine Trägerschicht durch Coextrusion herzustellen. In gewissen Fällen, wenn die Trägerschicht selbst siegelfähig ist, kann auch auf eine separate Siegelschicht verzichtet werden.

Die Siegelschichten sind üblicherweise Polyethylene, z.B. LDPE, LLDPE, MDPE und Mischungen davon oder coextrudiert, Metallozene Polyethylene und lonomere, z.B. Surlyn®, oder coextrudierte Folien aus diesen Materialien mit PE als Trägerschicht. Für spezielle Anwendungen können auch Polypropylene verwendet werden. Die Dicke der Siegelschichten liegt im Bereich von 10 bis 100 µm, vorzugsweise 15 bis 75 µm.

Geeignete Trägerschichten sind Kunststofffilme aus Polyester, Polyethylen, Polypropylen oder Polyamid. Ein bevorzugter Polyester ist PET (Polyethylenterephthalat) in einer bevorzugten Dicke von 8 bis 20µm, insbesondere 12 µm. Der als Trägerschicht eingesetzte Kunststofffilm kann frontal bedruckt und gegebenenfalls mit einem gleitfähigen Überlack versehen oder konterbedruckt sein.

Der als Trägerschicht eingesetzte Kunststofffilm kann mit einer Barriereschicht gegen den Durchtritt von Sauerstoff, Wasserdampf und Aromastoffen beschichtet sein. Geeignete Barriereschichten sind z. B. keramische Dünnschichten aus Siliziumoxiden und/oder Aluminiumoxid, die durch Sputtern oder durch Abscheidung aus dem Vakuum aufgetragen werden, oder Kunststofffolien, z. B. aus Materialien der Reihe der Vinylalkohole, z. B. der Ethyl-Vinyl-A1-kohol-Polymere oder des Polyvinylidenchlorids. Anstelle einer der genannten Barriereschichten kann auch eine Folie aus Metall, insbesondere aus Aluminium oder einer Aluminiumlegierung als Trägerschicht eingesetzt werden.

Die einzelnen Folien bzw. Folienstreifen der Verpackung, welchen die Wände der Haupt- und Dosierkammer bilden, können aus demselben oder aus unterschiedlichen Materialien bestehen und den gleichen oder einen unterschiedlichen Schichtaufbau aufweisen. Vorzugsweise besteht die Verpackung jedoch aus demselben Verpackungsmaterial.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1: eine Draufsicht auf eine Verpackung mit Dosiersystem;
- Fig. 2: einen Längsschnitt durch eine Vorstufe der Verpackung von Fig. 1 in Flachlage;
- Fig. 3: die Draufsicht auf eine erste Seite (Vorderseite) der in Fig. 2 dargestellten Vorstufe der Verpackung von Fig. 1 in Blickrichtung Y1;
- Fig. 4: die Draufsicht auf die Rückseite der in Fig. 2 dargestellten Vorstufe der Verpackung von Fig. 1 in Blickrichtung Y2;
- Fig. 5: eine erste Stufe eines Verfahrens zur Herstellung von Verpackungen mit einem Dosiersystem gemäss Fig. 1;
- Fig. 6: eine auf die erste Stufe von Fig. 5 folgende zweite Stufe des Verfahrens zur Herstellung von Verpackungen mit einem Dosiersystem gemäss Fig. 1;

- Fig. 7: die Draufsicht auf eine erste Siegelgeometrie zur Bildung eines ersten Teils des Dosiersystems der Verpackung von Fig. 1;
- Fig. 8: die Draufsicht auf eine zweite Siegelgeometrie zur Bildung eines zweiten Teils des Dosiersystems der Verpackung von Fig. 1 in der Position vor Ausführung der zweien Stufe des Verfahrens;
- Fig. 9: die Draufsicht auf die Siegelgeometrie von Fig. 8 in der Position nach Ausführung der zweien Stufe des Verfahrens;
- Fig. 10: die Draufsicht auf die übereinanderliegenden ersten und zweiten Siegelgeometrien nach Ausführen des abschliessenden Siegelvorgangs;

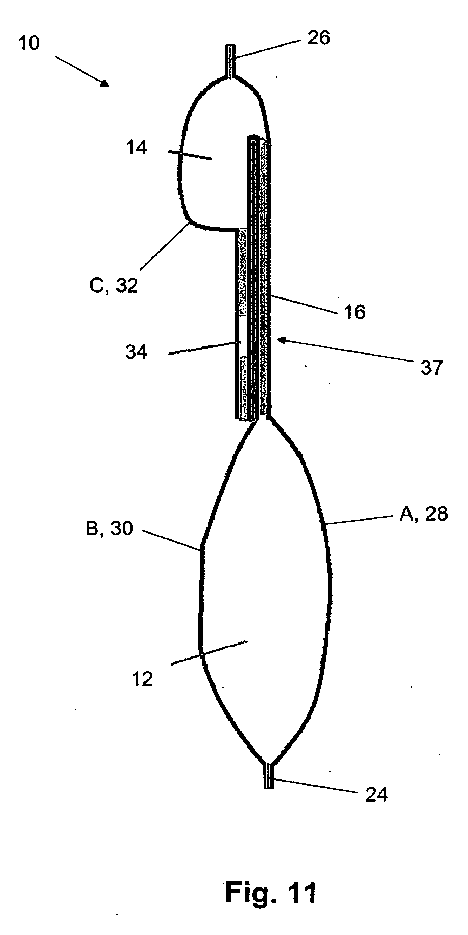

- Fig. 11: einen Längsschnitt durch eine mit dem Verfahren gemäss den Fig. 5 bis 10 hergestellte Verpackung mit einem Dosiersystem;
- Fig. 12: eine der Fig. 5 entsprechende erste Stufe eines alternativen Verfahrens zur Herstellung von Verpackungen mit einem Dosiersystem gemäss Fig. 1;
- Fig. 13: eine der Fig. 6 entsprechende zweite Stufe des alternativen Verfahrens zur Herstellung von Verpackungen mit einem Dosiersystem gemäss Fig. 1;

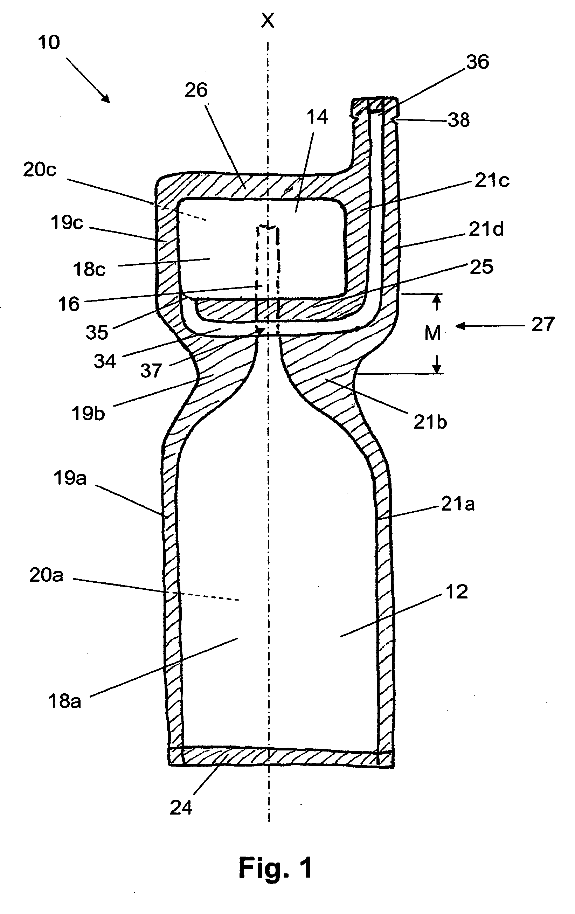

Eine in Fig. 1 bis 4 beispielhaft dargestellte Verpackung 10 aus einem folienförmigen, flexiblen Verpackungsmaterial weist eine Hauptkammer 12 zur Lagerung eines Füllgutes und eine mit der Hauptkammer 12 über einen schlauchförmigen ersten Kanal 16 in Verbindung stehende Dosierkammer 14 auf. Im vorliegenden Beispiel ist die Hauptkammer 12 aus einer Vorderseite 18a und einer Rückseite 20a in Form eines Schlauchbeutels gebildet, wobei die Hauptkammer 12 bildende Vorder- und Rückseiten 18a, 20a über erste Längssiegelnähte 19a, 21 a gegeneinander gesiegelt sind.

Beim Übergang der Hauptkammer 12 in den die Hauptkammer 12 mit der Dosierkammer 14 verbindenden schlauchförmigen ersten Kanal 16 gehen die ersten Längssiegelnähte 19a, 21 a in breitere Siegelflächen 19b, 21 b über und laufen auf der Höhe des Eintritts des ersten Kanals 16 in die Dosierkammer 14 als schmale, die Dosierkammer 14 begrenzende zweite Längssiegelnähte 19c, 21c weiter. Eine weitere Längssiegelnaht 21d begrenzt zusammen mit der Längssiegelnaht 21 c der Dosierkammer 14 einen weiter unten näher beschriebenen zweiten Kanal 34.

Die Längssiegelnähte 19a, 21a und 19c, 21c der Haupt- und Dosierkammern 12, 14 sind im wesentlichen parallel zu einer Längsachse der Verpackung 10 angeordnet. Der aus Teilen der Längssiegelnähte 19a, 21 a und 19c, 21c, der dazwischen liegenden breiteren Siegelflächen 19b, 21 b und einer die Dosierkammer 14 begrenzenden weiteren Quersiegelnaht 25 zusammengesetzte Siegelbereich in einem Mittelteil M der Verpackung zwischen Hauptkammer 12 und Dosierkammer 14 wird nachfolgend auch als Übergangssiegelbereich 27 bezeichnet.

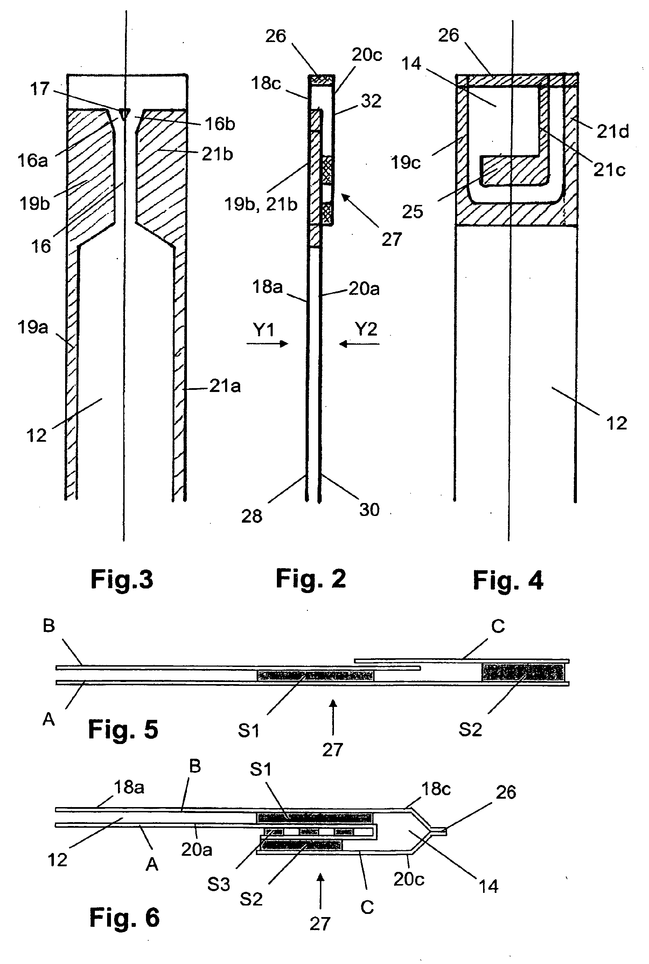

Wie aus Fig. 3 erkennbar, ist der schlauchförmige erste Kanal 16 in einem Bereich des in die Dosierkammer 14 mündenden Endes durch eine etwa in einer Längsachse des ersten Kanals 16 verlaufende kurze Siegelnaht 17 in zwei Teilkanäle 16a, 16b aufgeteilt. Diese Ausgestaltung des Auslaufbereichs des ersten Kanals 16 in die Dosierkammer 14 bewirkt, dass der bei einem Durchfluss von Füllgut aus der Hauptkammer 12 in die Dosierkammer 14 sich vergrössernde Durchflussquerschnitt bei nachlassendem Druck auf die Hauptkammer 12 schneller wieder zurückgeht und damit die Wirkung des Auslaufbereichs als Rückschlagventil noch verstärkt, so dass einen Rückfluss aus der Dosierkammer 14 in die Hauptkammer 12 praktisch verhindert wird.

Wie die Hauptkammer 12 ist auch die Dosierkammer 14 aus einer Vorderseite 18c und einer Rückseite 20c in Form eines Schlauchbeutels gebildet, wobei die Vorder- und Rückseiten 18c, 20c über zweite Längssiegelnähte 19c, 21 c gegeneinander gesiegelt sind.

Eine die ersten Längssiegelnähte 19a, 21a miteinander verbindende erste Quersiegelnaht 24 schliesst die Hauptkammer 12 auf der dem ersten Kanal 16 abgewandten Seite ab. In gleicher Weise schliesst eine die zweiten Längssiegelnähte 19c, 21 c miteinander verbindende zweite Quersiegelnaht 26 die Dosierkammer 14 auf der dem ersten Kanal 16 abgewandten Seite ab.

Ein die Vorderseite 18a der Hauptkammer 12 bildender erster Folienstreifen 28 erstreckt sich von der die Hauptkammer 12 abschliessenden ersten Quersiegelnaht 24 bis zu der die Dosierkammer 14 abschliessenden zweiten Quersiegelnaht 26 und bildet über der Dosierkammer 14 eine Vorderseite 18c der Dosierkammer 14.

Ein die Rückseite 20a der Hauptkammer 12 bildender zweiter Folienstreifen 30 erstreckt sich von der die Hauptkammer 12 abschliessenden ersten Quersiegelnaht 24 bis etwa auf die Höhe des in die Dosierkammer 14 mündenden Endes des ersten Kanals 16.

Ein die Rückseite 20c der Dosierkammer 14 bildender dritter Folienstreifen 32 erstreckt sich von der die Dosierkammer 14 abschliessenden zweiten Quersiegelnaht 26 bis etwa auf die Höhe des Übergangs der Hauptkammer 12 in den die Hauptkammer 12 mit der Dosierkammer 14 verbindenden ersten Kanal 16.

Im Übergangssiegelbereich 27 im Mittelteil M der Verpackung zwischen Hauptkammer 12 und Dosierkammer 14, d. h. im Bereich der breiten, den ersten Kanal 16 begrenzenden, durch Gegeneinandersiegeln des ersten Folienstreifens 28 und des zweiten Folienstreifens 30 entstehenden Siegelflächen ist ein durch Gegeneinandersiegeln des zweiten Folienstreifens 30 und des dritten Folienstreifens 32 entstehende Siegelflächen gebildeter, schlauchförmiger zweiter Kanal 34 angeordnet.

Der zweite Kanal 34 bildet einen Austrittskanal für das von der Dosierkammer 14 aus der Verpackung 10 ins Freie abzugebende Füllgut und erstreckt sich von einer Austrittsöffnung 35 der Dosierkammer 14 zu einer Ausgabestelle 36 an dem der Austrittsöffnung 35 der Dosierkammer 14 fernen Ende des zweiten Kanals 34. Auf dem Weg von der Dosierkammer 14 zur Ausgabestelle 36 der Verpackung 10 überquert der zweite Kanal 34 den ersten Kanal 16 im gezeigten Ausführungsbeispiel etwa rechtwinklig in einem Kreuzungspunkt 37. Der Kreuzungswinkel der beiden Kanäle 16, 34 kann selbstverständlich von einem 90°-Winkel abweichen.

Wie beispielsweise aus Fig. 1 ersichtlich, sind an der gebrauchsfertigen Verpackung 10 nicht benötigte Bereiche von Siegelflächen weggeschnitten. Insbesondere ist der schlauchförmige zweite Kanal 34 gegen sein freies Ende hin freigelegt und dadurch aus der durch die Siegelflächen gebildeten Ebene heraus beweglich ausgebildet. In kurzem Abstand zu seinem freien Ende ist der schlauchförmige Kanal 34 zur leichteren Öffnung mit Anreisskerben 38 als Öffnungshilfen ausgestattet. Selbstverständlich kann der Kanal 34 auch durch einen mit einer Schere quer über den Kanal 34 gelegten Schnitt geöffnet werden.

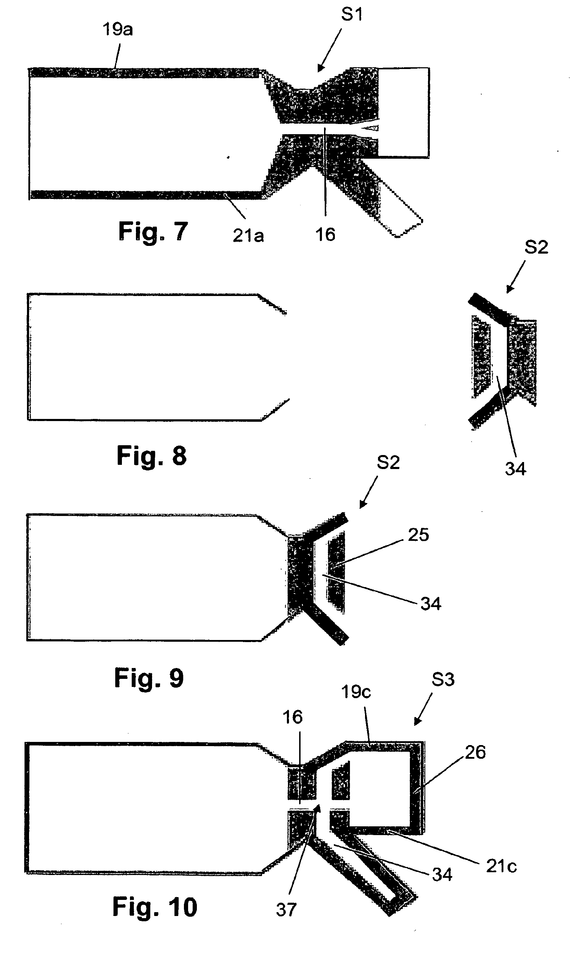

Bei einem in den Fig. 5 bis 10 dargestellten Verfahren zur kontinuierlichen Herstellung der Verpackung 10 mit Dosiersystem werden gleichzeitig drei sich teilweise überlappende Folienbänder A, B und C aus Verpackungsmaterial an in der Zeichnung nicht dargestellten Verarbeitungsstationen vorbeigeführt und unter Einhaltung der für die Ausbildung der Kanäle 16, 34 des Dosiersystems 12 erforderlichen Siegelgeometrien gegeneinander gesiegelt. Die in Flachlage zusammenhängenden Verpackungen 10 werden anschliessend auf Endmass geschnitten und vereinzelt, wobei diese Verarbeitungsschritte auch erst kurz vor oder nach dem Abfüllen von Füllgut vorgenommen werden können. Gemäss Fig. 5 wird ein erstes Folienband A vorgelegt. Ein zweites Folienband B und ein drittes Folienband C liegen dem ersten Folienband A auf und bewegen sich mit gleicher Geschwindigkeit wie das Folienband A durch eine Siegelstation, in welcher eine Siegelung des zweiten Folienbandes B gegen das erste Folienband A mit einer zur Ausbildung des schlauchförmigen ersten Kanals 16 des Dosiersystems 12 und zur Ausbildung der beiden ersten Längssiegelnähte 19a, 21a angepassten, in Fig. 7 dargestellten ersten Siegelgeometrie S1 erfolgt. Gleichzeitig erfolgt in der Siegelstation eine Siegelung des dritten Folienbandes C gegen das erste Folienband A mit einer zur Ausbildung des schlauchförmigen zweiten Kanals 34 des Dosiersystems 12 angepassten, in Fig. 8 dargestellten zweiten Siegelgeometrie S2.

Gemäss Fig. 8 ist die in Fig. 5 gezeigte gegenseitige Lage und der Abstand der beiden Siegelgeometrien S1 und S2 zueinander derart gewählt, dass nach dem Falten des Folienbandes A und Siegeln der Aussenseite Folienbandes A gegen sich selbst die beiden Siegelgeometrien S1 und S2 so zueinander stehen, dass sich die schlauchförmigen Kanäle 16, 34 in einem rechten Winkel kreuzen (Fig. 6 und 9). Gleichzeitig mit dem Siegeln des gegen sich selbst gefalteten Folienbandes A werden auch die beiden zweiten Längssiegelnähte 19c, 21 c und die zweite Quersiegelnaht 26 der nun deckungsgleich aufeinanderliegenden Folienbänder A, C Innenseite zu Innenseite gemäss der in Fig. 10 gezeigten dritten Siegelgeometrie S3 gegeneinander gesiegelt.

Nach dem Befüllen der Hauptkammer 12 mit Füllgut wird die Hauptkammer 12 durch Anbringen der ersten Quersiegelnaht 24 verschlossen.

Bei einem Endverbraucher wird die Verpackung durch Wegreissen bzw. Wegschneiden eines Endteils des Kanals 34 geöffnet. Durch Zusammendrücken des Hauptkanals 12 von Hand wird unter dem aufgebrachten Druck Füllgut aus der Hauptkammer durch den ersten Kanal 16 in die Dosierkammer 24 gedrückt. Im Normalfall wird zur Bereitstellung gleicher Portionengrössen die Dosierkammer 14 vollständig gefüllt. Bei diesem Füllvorgang wird der schlauchförmige erste Kanal 16 auf seinen maximalen Durchmesser gedehnt und verhindert damit beim Kreuzungspunkt 37 der beiden Kanäle 16, 34 ein gleichzeitige Aufweitung des zweiten Kanals 34 auf seinen maximalen Durchmesser, d. h., der Durchfluss von Füllgut durch den zweiten Kanal 34 wird auf diese Weise praktisch unterbunden. Sobald die Dosierkammer 14 mit Füllgut aus der Hauptkammer 12 gefüllt ist, kann der Inhalt der Dosierkammer 14 durch Zusammendrücken der Dosierkammer 14 beispielsweise zwischen Daumen und Zeigfinger über den schlauchförmigen zweiten Kanal 34 und durch die Öffnung am freien Ende des Kanals 34 aus der Verpackung 10 herausgedrückt werden. Bei diesem Vorgang bleibt wegen der in einer Ebene liegenden Siegelbereiche die Öffnung des in der Dosierkammer 14 mündenden freien Endes des ersten Kanals 16 praktisch geschlossen und verhindert damit einen Rückfluss von Füllgut in die Hauptkammer 12. Hinzu kommt, dass nun der schlauchförmige zweite Kanal 34 auf seinen maximalen Durchmesser gedehnt wird und damit beim Kreuzungspunkt der beiden Kanäle 16, 34 ein gleichzeitige Aufweitung des ersten Kanals 16 auf seinen maximalen Durchmesser verhindert, d. h., der Durchfluss von Füllgut durch den ersten Kanal 16 wird auf diese Weise praktisch unterbunden.

Die Verpackung 10 enthält normalerweise ein fliessfähiges, insbesondere ein flüssiges, teilflüssiges oder pastöses Füllgut 11. In Verpackungen 10 können beispielsweise Ketchup, Senf, Mayonnaise und dergleichen Nahrungsmittel als Füllgut enthalten sein. Die Anwendung der Verpackung ist aber nicht auf Nahrungsmittel beschränkt, sondern umfasst vielmehr alle Arten von fliess- und rieselfähigen Füllgütern, wie beispielsweise Cremen im Bereich der Kosmetik und Schmierfette, Klebstoffe und dergleichen technische Erzeugnisse im Bereich der Technik.

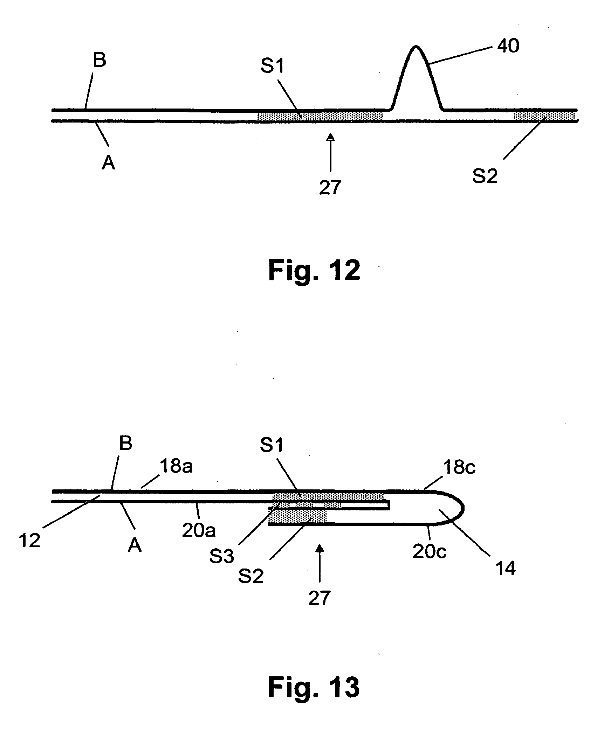

Das in den Fig. 12 und 13 dargestellte alternative Herstellungsverfahren unterscheidet sich von dem Verfahren gemäss den Fig. 5 und 6 dadurch, dass anstelle eines dritte Folienbandes C das zweite Folienband B entsprechend breiter gewählt und zusätzlich eine zwischen der ersten Siegelgeometrie S1 und der zweiten Siegelgeometrie S2 eine Materialschlaufe 40 angeordnet wird. Damit entfällt die zweite Quersiegelnaht 26. Bei einer in der Zeichnung nicht gezeigten Verfahrensvariante kann entsprechend der in den Fig. 2 bis 4 gezeigten Anordnung auf die Faltung des ersten Folienband A verzichtet werden, so dass sich im mittleren Bereich M und damit auch im Kreuzungspunkt 37 der beiden Kanäle 16, 34 anstelle eines 4-Lagen- nur ein 3-Lagen-Verbund ergibt.

## Patentansprüche

1. Verpackung für fliess- und rieselfähige Füllgüter, mit einer Dosiereinrichtung zur portionenweisen Entnahme von Füllgut, mit
einer Hauptkammer (12) zur Lagerung des Füllgutes, einer mit der Hauptkammer (12) über einen ersten Kanal (16) verbundenen Dosierkammer (14) zur Bereitstellung von Füllgutportionen und einem von der Dosierkammer (14) zu einer Ausgabeöffnung (36) führenden, den ersten Kanal (16) querenden zweiten Kanal (34), wobei die Hauptkammer (12), die Dosierkammer (14) und die beiden Kanäle (16, 34) schlauchförmig aus einem folienförmigen, flexiblen Verpackungsmaterial gebildet und durch eine Anordnung von einander anliegenden und miteinander durch Siegelung verbundenen Flächenbereichen von Verpackungsmaterial begrenzt sind.

2. Verpackung nach Anspruch 1, **dadurch gekennzeichnet, dass** die Hauptkammer (12) und der erste Kanal (16) zwischen gegeneinander gesiegelten ersten Folienstreifen (28) und zweiten Folienstreifen (30), die Dosierkammer (14) zwischen dem ersten Folienstreifen (28) und einem gegen den ersten Folienstreifen (28) gesiegelten dritten Folienstreifen (32) und der zweite Kanal (34) zwischen den gegeneinander gesiegelten dritten Folienstreifen (32) und zweiten Folienstreifen (30) aus dem folienförmigen, flexiblen Verpackungsmaterial gebildet sind.

3. Verpackung nach Anspruch 2, **dadurch gekennzeichnet, dass** der zweite Folienstreifen (30) auf sich selbst gefaltet und gegen sich selbst gesiegelt und der dritte Folienstreifen (32) gegen den gefalteten Teil des zweiten Folienstreifens (30) gesiegelt ist.

4. Verpackung nach Anspruch 1, **dadurch gekennzeichnet, dass** die Hauptkammer (12), der erste Kanal (16), die Dosierkammer (14) und der zweite Kanal (34) zwischen gegeneinander gesiegelten ersten Folienstreifen (28) und zweiten Folienstreifen (30) aus dem folienförmigen, flexiblen Verpackungsmaterial gebildet sind.

5. Verpackung nach Anspruch 4, **dadurch gekennzeichnet, dass** der erste Folienstreifen (28) auf sich selbst gefaltet und gegen sich selbst gesiegelt und der zweite Folienstreifen (30) gegen den gefalteten Teil des ersten Folienstreifens (28) gesiegelt ist.

6. Verpackung nach einem der Ansprüche 1 bis 5, **dadurch gekennzeichnet, dass** der erste Kanal (16) an einem in die Dosierkammer (14) mündenden Ende in zwei Teilkanäle (16a, 16b) aufgeteilt ist.

7. Verpackung nach einem der Ansprüche 1 bis 6, **dadurch gekennzeichnet, dass** der erste Kanal (16) und der zweite Kanal (34) sich in einem Winkel von 45° bis 90°, vorzugsweise in einem Winkel von 80° bis 90°, kreuzen.

8. Verpackung nach einem der Ansprüche 1 bis 7, **dadurch gekennzeichnet, dass** das Verpackungsmaterial beidseitig siegelfähig ist.

## Claims

1. Packaging for filling products capable of flowing and pouring, with a metering device for removing the filling product in portions, with a main chamber (12) for storing the filling product, a metering chamber (14), which is connected to the main chamber (12) by a first channel (16), to provide filling product portions, and a second channel (34) leading from the metering chamber (14) to a dispensing opening (36) and crossing the first channel (16), the main chamber (12), the metering chamber (14) and the two channels (16, 34) being formed in a tube-like manner from a film-like, flexible packaging material and being limited by an arrangement of surface regions of packaging material abutting one another and connected to one another by sealing.

2. Packaging according to claim 1, **characterised in that** the main chamber (12) and the first channel (16) between first film strips (28) and second film strips (30) which are sealed against one another, the metering chamber (14) between the first film strip (28) and a third film strip (32) which are sealed against the first film strip (28), and the second channel (34) between the third film strip (32) and second film strip (30) which are sealed against one another, are formed from the film-like, flexible packaging material.

3. Packaging according to claim 2, **characterised in that** the second film strip (30) is folded onto itself and sealed against itself and the third film strip (32) is sealed against the folded part of the second film strip (30).

4. Packaging according to claim 1, **characterised in that** the main chamber (12), the first channel (16), the metering chamber (14) and the second channel (34) between first film strips (28) and second film strips (30) which are sealed against one another, are formed from the film-like, flexible packaging material.

5. Packaging according to claim 4, **characterised in that** the first film strip (28) is folded onto itself and sealed against itself, and the second film strip (30) is sealed against the folded part of the first film strip (28).

6. Packaging according to any one of claims 1 to 5, **characterised in that** the first channel (16) at an end opening into the metering chamber (14) is divided into two part-channels (16a, 16b).

7. Packaging according to any one of claims 1 to 6, **characterised in that** the first channel (16) and the second channel (34) intersect at an angle of 45° to 90°, preferably at an angle of 80° to 90°.

8. Packaging according to any one of claims 1 to 7, **characterised in that** the packaging material is sealable on both sides.

## Revendications

1. Emballage pour substances de remplissage liquides ou susceptibles de s'écouler en vrac, comprenant un dispositif de dosage pour le prélèvement par portions du produit de remplissage,
l'emballage comportant une chambre principale (12) pour le stockage du produit de remplissage, une chambre de dosage (14) reliée à la chambre principale (12) par l'intermédiaire d'un premier canal (16) et destinée à préparer des portions de produit de remplissage, ainsi qu'un deuxième canal (34), qui mène de la chambre de dosage (14) à une ouverture de sortie de distribution (36), et qui croise le premier canal (16),
la chambre principale (12), la chambre de dosage (14) et les deux canaux (16, 34) étant réalisés sous forme tubulaire en un matériau d'emballage flexible en forme de feuille, et étant délimités par un agencement de secteurs de surface de matériau d'emballage adjacents et mutuellement reliés par scellage.

2. Emballage selon la revendication 1, **caractérisé en ce que** la chambre principale (12) et le premier canal (16) sont formés entre une première bande de feuille (28) et une deuxième bande de feuille (30) scellées mutuellement l'une contre l'autre, la chambre de dosage (14) est formée entre la première bande de feuille (28) et une troisième bande de feuille (32) scellée contre la première bande de feuille (28), et le deuxième canal (34) est formé entre la troisième bande de feuille (32) et la deuxième bande de feuille (30) du matériau d'emballage flexible en forme de feuille, scellées l'une contre l'autre.

3. Emballage selon la revendication 2, **caractérisé en ce que** la deuxième bande de feuille (30) est repliée sur elle-même et scellée contre elle-même, et la troisième bande de feuille (32) est scellée contre la partie repliée de la deuxième bande de feuille (30).

4. Emballage selon la revendication 1, **caractérisé en ce que** la chambre principale (12), le premier canal (16), la chambre de dosage (14) et le deuxième canal (34) sont formés entre une première bande de feuille (28) et une deuxième bande de feuille (30) du matériau d'emballage flexible sous forme de feuille, scellées mutuellement l'une contre l'autre.

5. Emballage selon la revendication 4, **caractérisé en ce que** la première bande de feuille (28) est repliée sur elle-même et scellée contre elle-même, et la deuxième bande de feuille (30) est scellée contre la partie repliée de la première bande de feuille (28).

6. Emballage selon l'une des revendications 1 à 5, **caractérisé en ce que** le premier canal (16) est subdivisé en deux canaux partiels (16a, 16b), à une extrémité débouchant dans la chambre de dosage (14).

7. Emballage selon l'une des revendications 1 à 6, **caractérisé en ce que** le premier canal (16) et le deuxième canal (34) se croisent en formant un angle de 45° à 90°, de préférence un angle de 80° à 90°.

8. Emballage selon l'une des revendications 1 à 7, **caractérisé en ce que** le matériau d'emballage est susceptible d'être scellé sur les deux faces.
